# EUROPEAN PATENT APPLICATION

(11) **EP 4 400 362 A1**
(43) Date of publication of application: **17.07.2024**
(21) Application number: 23220506.2
(22) Date of filing: 28.12.2023
(51) Int. Cl.: B60L 53/80, H01M 10/44

(54) **BATTERY SWAPPING SYSTEM, BATTERY SWAPPING NETWORK SYSTEM, AND METHOD OF PROVIDING ANCILLARY ELECTRIC POWER**

(30) Priority: 30.12.2022 US 202263477875 P
(71) Applicant: Gogoro Inc., Wanchai, Hong Kong (CN)
(72) Inventor: HUANG, Yi-Shu, 333 Taoyuan City (TW); PAN, Chu-Ching, 333 Taoyuan City (TW); TAI, Yu-Kan, 333 Taoyuan City (TW); YU, Shih-Hsien, 333 Taoyuan City (TW); CHIEN, Yu-Chang, 333 Taoyuan City (TW); LIN, Yu-Chih, 333 Taoyuan City (TW); HUANG, Mao-Sheng, 333 Taoyuan City (TW); CHEN, Chien-Chung, 333 Taoyuan City (TW); CHEN, Chun-Chen, 333 Taoyuan City (TW); HUANG, Kuo-Chen, 333 Taoyuan City (TW); WANG, Yen-Hsiang, 333 Taoyuan City (TW)
(74) Representative: Viering, Jentschura & Partner mbB Patent- und Rechtsanwälte

(57) **Abstract**

A battery swapping system (100, 200A, 200B), a battery swapping network system (S1, S2), and a method of providing ancillary electric power are disclosed. The battery swapping system (100, 200A, 200B) has a power supply system (110, 210) coupled to a power grid (PG) and a grid monitoring system (PM), a battery swapping cabinet (120, 220) accommodating a plurality of swappable batteries (B) and a control system (130, 230). A verification is executed when a swappable battery (B) is placed into the battery swapping cabinet (120, 220), and the swappable battery (B) may be charged or discharge after the verification is passed. When a grid factor is abnormal, the battery swapping system (100, 200A, 200B) stops receiving power from the power grid (PG), and controls the swappable batteries (B) to discharge to provide at the same time a driving power to the battery swapping system (100, 200A, 200B) and an ancillary electric power to the power grid (PG).

## Description

### BACKGROUND

### Technical Field

The present disclosure relates to power management technology, and in particular, to a battery swapping system, a battery swapping network system, and a method of providing ancillary electric power.

### Description of Related Art

With the popularity of battery-swapping electric vehicles, battery swapping stations have been widely deployed everywhere. When the electric power of the swappable battery in an electric vehicle is running low, user may go to a nearby battery swapping station to exchange for a swappable battery with sufficient electric power to immediately restore the available endurance mileage of the electric vehicle. However, the demand for battery swapping is constantly changing. Each battery swapping station will have periods of high usage (such as commuting hours) and periods of low usage (such as non-commuting hours and late at night), and battery swapping stations in suburban areas usually have lower usage rates on weekdays. Therefore, how to improve the utilization rate of battery swapping stations has become an important issue.

In order to improve the reliability of the power grid, the system capacity adequacy, system quality and system safety of the power grid must be improved. The former must rely on more power sources to meet load (consumption) demand, and the latter may maintain the dynamic balance of power supply capacity and consumption through a power ancillary service to avoid power failure.

### SUMMARY

The summary is provided to offer a simplified overview of the present disclosure for basic understanding. The summary is not a comprehensive complete description of the present disclosure and is not intended to indicate important/key elements or define the scope of the embodiments of the present disclosure.

One aspect of the present disclosure is a battery swapping system, comprising a power supply system, at least one battery swapping cabinet and a control system. The power supply system is coupled to a power grid and a grid monitoring system configured to detect a grid factor. The at least one battery swapping cabinet is configured to accommodate a plurality of swappable batteries. The control system is coupled to the power supply system and the at least one battery swapping cabinet. When a swappable battery is placed into the at least one battery swapping cabinet, the control system is configured to perform a verification on the placed swappable battery, and the control system is further configured to control the plurality of swappable batteries that passed the verification in the at least one battery swapping cabinet to charge or discharge. When the grid factor is abnormal, the power supply system stops receiving power from the power grid, and the control system controls the plurality of swappable batteries to discharge to provide a driving power to the battery swapping system and an ancillary electric power to the power grid.

Another aspect of the present disclosure is a battery swapping network system, comprising a plurality of battery swapping systems and a backend system. The battery swapping systems are arranged on a plurality of geographical locations. The backend system is coupled to the plurality of battery swapping systems through internet, and is configured to transmit a power ancillary configuration to the plurality of battery swapping systems, so that the plurality of battery swapping systems provides a plurality of ancillary electric power when the grid factor is abnormal.

Another aspect of the present disclosure is a method of providing ancillary electric power by a battery swapping system, comprising: providing power to the battery swapping system by a power grid; receiving, by at least one battery swapping cabinet of the battery swapping system, a swappable battery; after the received swappable battery passes a verification, allowing the received swappable battery to charge or discharge, and selecting one of a plurality of swappable batteries placed into the at least one battery swapping cabinet to swap with the received swappable battery; and when the grid factor is abnormal, controlling the power supply system to stop receiving power from the power grid, and controlling the plurality of swappable batteries to discharge to provide a driving power to the battery swapping system and an ancillary electric power to the power grid.

The battery swapping system, the battery swapping network system, and the method of providing ancillary electric power of the present disclosure may instantly provide ancillary electric power from swappable batteries when the grid factor is abnormal to maintain the stability of the power grid.

In addition to providing a battery swapping service, the present disclosure further configured to provide a power ancillary service, which may improve the utilization rate of battery swapping stations and swappable batteries.

In addition to the revenue from providing the battery swapping service, the present disclosure further obtains revenue from providing the power ancillary service.

It is to be understood that both the foregoing general description and the following detailed description are by examples, and are intended to provide further explanation of the disclosure as claimed.

### BRIEF DESCRIPTION OF THE DRAWINGS

The present disclosure may be more fully understood by reading the following detailed description of the embodiment, with reference made to the accompanying drawings as follows:
FIG. 1 is a schematic diagram of a battery swapping network system in some embodiments of the present disclosure.
FIG. 2 is a schematic diagram of a battery swapping network system in some embodiments of the present disclosure.
FIG. 3A is a schematic diagram of a power conversion module in some embodiments of the present disclosure.
FIG. 3B is a schematic diagram of a power conversion module in some embodiments of the present disclosure.
FIG. 4 is a flowchart illustrating a method of providing ancillary electric power by a battery swapping system in some embodiments of the present disclosure.
FIG. 5 is a flowchart illustrating specific steps in the method in some embodiments of the present disclosure.
FIG. 6 is a flowchart illustrating specific steps in the method in some embodiments of the present disclosure.
FIG. 7 is a flowchart illustrating specific steps in the method in some embodiments of the present disclosure.
FIG. 8 is a flowchart illustrating specific steps in the method in some embodiments of the present disclosure.
FIG. 9 is a flowchart illustrating specific steps in the method in some embodiments of the present disclosure.

### DETAILED DESCRIPTION

In order to make the description of the present disclosure more detailed and complete, the following provides an illustrative description of the implementation and specific embodiments. However, this is not the only form of implementing or using the specific embodiments. The embodiments cover the features of multiple specific embodiments as well as the steps and sequences used to construct and operate these specific embodiments, but other specific embodiments may also be used to achieve the same or equivalent functions and step sequences.

Unless otherwise defined in the present disclosure, scientific and technical terms used herein have the same meanings as commonly understood and customary by a person having ordinary skill in the art. In addition, as long as there is no conflict between the context and the context, the singular term used in the present disclosure may cover the plural form of the term, and the plural term used may also cover the singular form of the term.

In addition, the term "couple" used in the present disclosure may refer to direct physical or electrical contact between two or more components, or indirect physical or electrical contact. It may also refer to two or more components operating with each other or action.

"Battery swapping service" means that when the swappable battery is running low, user may go to the nearby battery swapping system to exchange the used (almost exhausted) swappable battery for a swappable battery with sufficient power (electric power). The aforementioned swappable battery may be used, for example, in electric vehicles (e.g., electric scooters or electric cars), smart parking poles or smart (traffic) lights and other electrical devices. Through the battery swapping service, users may easily and quickly extend the availability of electrical devices, such as the available endurance mileage of electric vehicles or the available operating time of smart parking poles.

"Power ancillary service" is a service that may restore the power grid to normal status when the power grid encounters unexpected events such as supply and demand imbalance or accidents. Common ancillary services include Regulation Reserve, Spinning Reserve and Supplemental Reserve. After many experiments, Regulation Reserve and Spinning Reserve require shorter durations and use lower feed capacities, so these services are suitable to be implemented by the battery swapping systems.

In order to improve the power grid's capacity adequacy and system quality and safety, the power company promotes a power trading platform, allowing relevant companies to join the power trading platform to trade additional power capacity and the power ancillary service. Through the power trading platform, relevant companies may obtain additional revenue by providing additional power capacity or the power ancillary service.

The present disclosure provides a battery swapping system, a battery swapping network system, and a method of providing ancillary electric power. In addition to providing the battery swapping service, when the power system of the power company is abnormal, the swappable batteries may be used immediately to provide the power ancillary service.

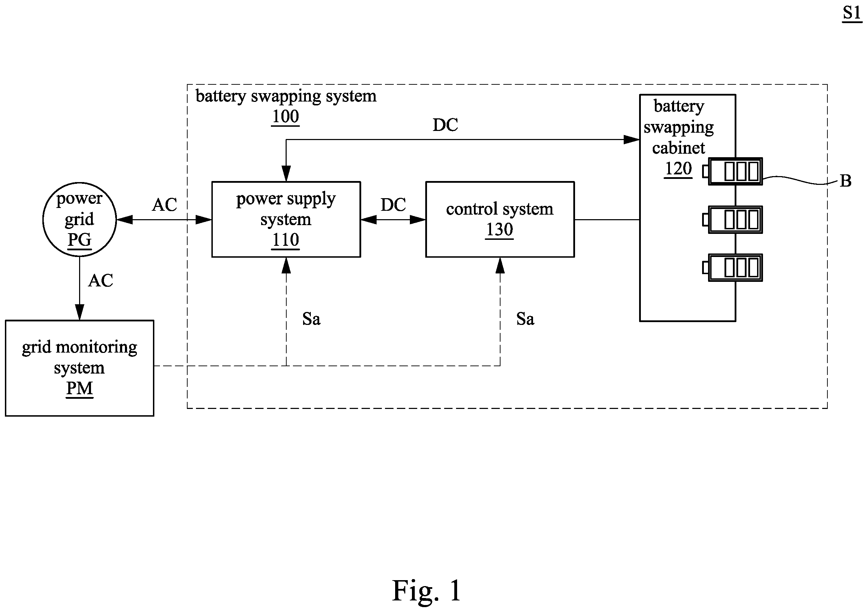

FIG. 1 is a schematic diagram of a battery swapping network system S1 in some embodiments of the present disclosure. The battery swapping network system S1 includes a battery swapping system 100, and is applied to a grid monitoring system PM and a power grid PG. The grid monitoring system PM is coupled to the power grid PG, and is configured to detect a grid factor of the power grid PG to determine whether the power supply capacity of the power grid PG is abnormal.

The battery swapping system 100 includes a power supply system 110, one or more battery swapping cabinets 120 and a control system 130. The power supply system 110 is coupled to the power grid PG and the grid monitoring system PM. When the power supply of the power grid PG is stable, the power supply system 110 converts the alternating current (AC) power AC provided by the power grid PG into the direct current (DC) power DC suitable for the battery swapping cabinet 120 and the control system 130. When the power supply of the power grid PG is unstable or abnormal, the battery swapping system 100 may provide/output ancillary electric power (the AC power AC) to the power grid PG by the power supply system 110. Detailed controls will be explained in subsequent paragraphs.

Each of the battery swapping cabinets 120 is coupled to the power supply system 110 and the control system 130, and includes a plurality of battery slots to accommodate a plurality of swappable batteries B. The control system 130 is coupled to the power supply system 110 and the battery swapping cabinet 120, and is configured to control or change the operating status of the power supply system 110 and the battery swapping cabinet 120. The control system 130 may be, but is not limited to one or more processors/controllers (including control circuits), such as a central processing unit (CPU) or an application-specific integrated circuit (ASIC). When the control system 130 includes multiple processors/controllers, these processors/controllers may be integrated in the same device, or distributed in the battery swapping system 100. For example, a power controller of each device of the power supply system 110, a connection controller and a communication controller of the battery holder in each battery swap slot, a controller of the battery swapping cabinet 120, a processor of an industrial PC, a controller of communication module, etc.

When a swappable battery B new to the system is placed in the battery swapping cabinet 120 (e.g., inserted into the battery slots), the control system 130 is configured to perform a verification on the placed swappable battery B. The control system 130 may control a part or all of the verified swappable batteries B in the battery swapping cabinet 120 to discharge or charge. Additionally, the control system 130 may lock or eject the swappable battery B that fails to pass verification. The aforementioned "verification" may obtain the identification data in the swappable battery B for the control system 130 to confirm the legality and safety of the placed swappable battery B. For example, confirm whether there are any of the following conditions: stolen battery, unauthorized battery, suspended user, abnormal use of the battery or battery data has been tampered with. The control system 130 may also searches for information about the placed swappable battery B on a backend system (e.g., a data server) based on the identification data. For example, personal data such as user identification data, personal privacy data, billing data, payment data; electric vehicle data such as identification data, vehicle registration data, and maintenance and repair data of the electric vehicle; battery usage data such as battery replacement times, battery replacement locations, and power consumption.

The battery swapping system 100 uses the power provided by the power grid PG to charge the swappable batteries B in the battery swapping cabinet 120, and the battery swapping system 100 further provides ancillary electric power to the power grid PG through the swappable batteries B as the power ancillary service.

As mentioned above, the grid monitoring system PM is configured to detect the grid factor of the power grid PG by measurement and provide a monitoring signal Sa to the battery swapping system 100, so that the battery swapping system 100 selectively changes the operation. In one embodiment, the monitoring signal Sa may include the grid factor. If the grid factor is abnormal, the battery swapping system 100 may determine that a value of the grid factor indicated by the received monitoring signal Sa is abnormal (e.g., a grid frequency is lower than a preset frequency). In other embodiments, if the grid factor is abnormal, the battery swapping system 100 may determine that the received monitoring signal Sa includes an abnormal signal.

The aforementioned "the grid factor is abnormal" may be that the grid factor is outside a normal range, lower than a normal value and/or higher than a normal value. The grid factor may be frequency, voltage/current or power. In the following embodiments, the grid factor will be a grid frequency as an example, but the type of the grid factor is not limited to this. A person having ordinary skill in the art may change the type of the grid factor to be monitored/detected based on the present disclosure, such as changing to monitoring a grid voltage. In addition, the situation of "the grid factor returns to normal" may be that the grid factor returns to a normal range or a normal value safe and stable to operate.

Take detecting that the grid frequency is too low as an example. When the grid frequency is lower than a preset frequency (e.g., the acceptable frequency lower threshold), the battery swapping system 100 or the grid monitoring system PM may confirm that the grid factor is abnormal. The aforementioned preset frequency may be lower than 60Hz (a grid frequency standard), or between 59Hz and 59.99Hz, such as 59.98Hz. When the grid frequency is higher than the preset frequency (e.g., acceptable frequency upper threshold), the battery swapping system 100 or the grid monitoring system PM may confirm that the grid factor is normal. The preset frequency mentioned above may be between 60Hz and 61 Hz.

In one embodiment, the battery swapping network system S1 may determine whether the grid factor is abnormal by the grid monitoring system PM, and provide the monitoring signal Sa to the battery swapping system 100 based on a detection results. Specifically, when the grid monitoring system PM determines that the grid factor is abnormal, the generated monitoring signal Sa will include a grid factor abnormal signal (e.g., a frequency abnormal signal), so as to indicate to the battery swapping system 100 that the power grid PG is abnormal (e.g., the grid frequency is too low).

In other embodiments, the battery swapping network system S1 may determine whether the grid factor is abnormal through the battery swapping system(s) 100. Specifically, after detecting the grid factor, the grid monitoring system PM may continuously, regularly or irregularly provide the monitoring signal Sa to the battery swapping system 100. The aforementioned provided monitoring signal Sa includes the aforementioned signal of the grid factor (the grid frequency). Then, the battery swapping system 100 may continuously, regularly or irregularly determine whether the power grid PG is abnormal based on the received grid factor, such as whether the grid frequency is lower than the preset frequency.

When the grid factor is abnormal, the power supply system 110 stops receiving power from the power grid PG to reduce the consumption of the power grid PG. Furthermore, the control system 130 may control the swappable batteries B in the battery swapping cabinet 120 to discharge to provide a driving power to the battery swapping system 100, and simultaneously transmit an ancillary electric power back to the power grid PG to increase electricity reserve.

Specifically, when the consumption and power supply capacity of the power grid PG are out of balance (e.g., caused by an instantaneous or temporary overload), the grid factor will be abnormal, if the balance may not be restored immediately, the power grid PG will collapse. In the present disclosure, a battery swapping network system formed by multiple battery swapping systems 100 may jointly reduce the consumption and increase the power supply, so that the power grid PG may quickly restore the balance between consumption and power supply capacity and stabilize the power supply quality.

When the grid factor is normal, the power supply system 110 receives power from the power grid PG as the driving power, and charges the swappable batteries B in the battery swapping cabinet 120.

In addition to more efficiently utilizing all the swappable batteries B placed in the battery swapping system 100, the present disclosure can make the user own the additional revenue by providing the power ancillary service and energy trading. Moreover, the swappable batteries B placed in the battery swapping system 100 may be used for the battery swapping service.

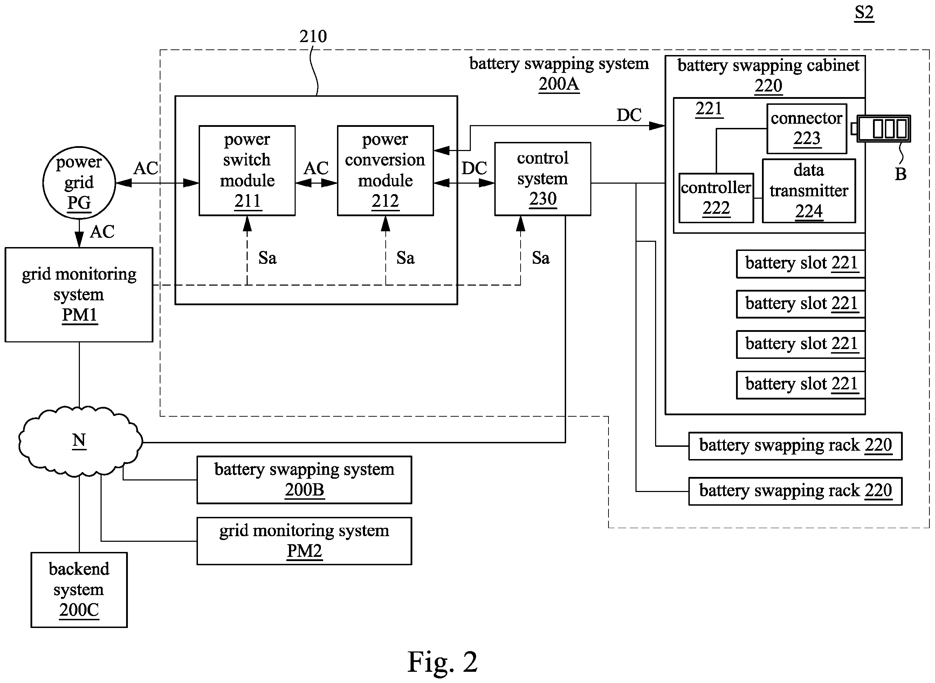

FIG. 2 is a schematic diagram of a battery swapping network system S2 in some embodiments of the present disclosure. In FIG. 2, the similar components associated with the embodiment of FIG. 1 are labeled with the same numerals for ease of understanding. The specific principle of the similar component has been explained in detail in the previous paragraphs, and unless it has a cooperative relationship with the components of FIG. 2, it is not repeated here.

The battery swapping network system S2 includes multiple battery swapping systems (FIG. 2 takes two battery swapping systems 200A-200B as an example, but the number of the battery swapping systems is not limited to this.) Each of the battery swapping systems may have the same or similar architecture, such as the battery swapping system 100 shown in FIG. 1, the battery swapping system 200B shown in FIG. 2, or the battery swapping systems of any embodiment.

In one embodiment, the battery swapping system 200A may include a power supply system 210, one or more battery swapping cabinets 220 and a control system 230.

The power supply system 210 includes a power switch module 211 and a power conversion module 212. The power switch module 211 is coupled to the power grid PG and the power conversion module 212, and is configured to teansmit an AC power AC from the power grid PG to the power conversion module 212 (through a power input connection), or is configured to transmit the AC power AC from the power conversion module 212 back to the power grid PG (through a power output connection). Specifically, when the power input connection between the power supply system 210 and the power grid PG is interrupted, the power supply system 210 stops receiving power from the power grid PG. When the power input connection is restored, the power supply system 210 starts receiving power from the power grid PG. The aforementioned power input connection and power output connection may be implemented in the same cable (changing the power flow direction by a switch) or different cables (respectively used for different power flow directions), which are not limited here.

In one embodiment, when it is determined that the grid factor is abnormal based on the monitoring signal Sa, the power switch module 211 may automatically interrupt the power input connection. Then, when the grid factor return/recover to normal, the power switch module 211 may automatically restore the power input connection.

In one embodiment, after a preset time has elapsed, but the grid factor is still abnormal, it may indicate that there is a serious problem with the power grid PG (e.g., a serious shortage of power supply capacity or a failure of important equipment), and it is difficult to restore stability through the power ancillary service. At this time, the power switch module 211 may automatically restore the power input connection to avoid meaninglessly and unhelpfully providing the ancillary electric power.

In one embodiment, during the period of providing the ancillary electric power, when the state of charge (SoC) of all (or a part) of swappable batteries B in the battery swapping cabinet 220 is lower than the preset SoC lower threshold (e.g., 20%, it may also be set to 15% or 10%), the power switch module 211 may automatically restore the power input connection to prevent the increase in damage to the swappable batteries B's health due to the too low available power capacity of the swappable batteries B.

In one embodiment, during the period of providing the ancillary electric power, when the power of part of the swappable batteries B in the battery swapping cabinet 220 is lower than the preset SoC lower threshold, the control system 230 may set the part of the swappable batteries B to stop discharging, and the remaining part of the swappable batteries B continues to provide the ancillary electric power, so as to avoid the increase in consumption of the part of the swappable batteries B due to low power.

The power conversion module 212 is coupled to the power switch module 211, the battery swapping cabinet 220 and the control system 230. The power conversion module 212 is configured to convert an AC power AC from the power grid PG into a DC power DC suitable for the control system 230 and the battery swapping cabinet 220. The power conversion module 212 is further configured to convert a DC power DC from the swappable battery B into an AC power AC suitable for the power grid PG.

As shown in FIG. 2, in one embodiment, each of the battery swapping cabinets 220 may include multiple battery slots 221. Each of the battery slots 221 includes a controller 222, a connector 223 and a data transmitter 224. The controller 222 is coupled to the connector 223 and the data transmitter 224, and is configured to detect a connection status of the connector 223 to drive the data transmitter 224. The data transmitter 224 may include a wired transmission module or a wireless transmission module, such as signal pins or Near Field Communication (NFC) module.

In one embodiment, the connector 223 and the data transmitter 224 may be arranged in the battery slots 221, when a swappable battery B is placed into any of the battery slots 221, and the connector 223 is coupled to the placed swappable battery B, the data transmitter 224 may communicate with the swappable battery B (e.g., a signal pins of the data transmitter 224 is connected to the swappable battery B, or the swappable battery B is located within the NFC effective communication range of the data transmitter 224), so that the control system 230 may verify the swappable battery B and read or write data.

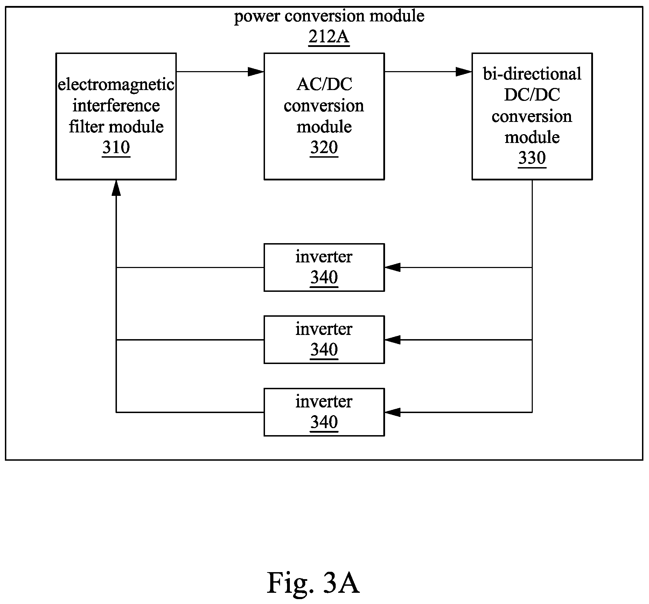

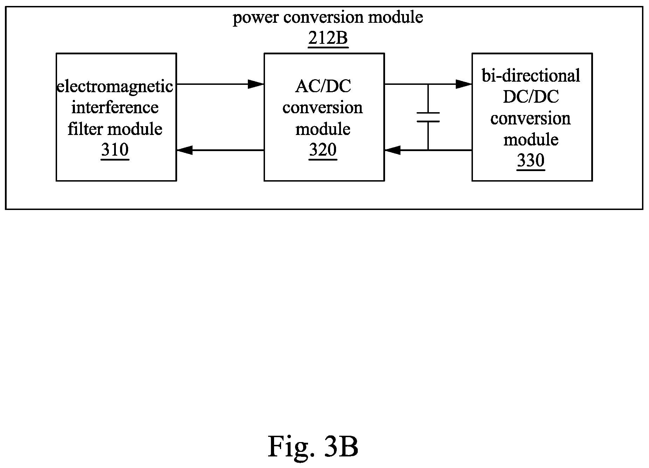

The following explains how to let the power conversion module 212 convert the AC power AC of the power grid PG into the DC power DC suitable for the battery swapping system, and convert the DC power DC of the swappable battery B into the AC power AC that may be transmitted back to the power grid PG. In order to perform the aforementioned power conversion, the power conversion module 212 may apply the structure of the power conversion module 212A as shown in FIG. 3A, or the structure of the power conversion module 212B as shown in FIG.3B.

In the embodiment of FIG. 3A, the power conversion module 212A may include one or more electromagnetic interference filter modules 310, one or more AC/DC conversion modules 320 and one or more bi-directional DC/DC conversion modules 330. The electromagnetic interference filter module 310 is coupled to the power grid PG. When the battery swapping system 200A receive power from the power grid PG directly or through the power switch module 211, the electromagnetic interference filter module 310 is configured to filter the noise in the AC power AC (as shown in FIG. 2) provided by the power grid PG. The AC/DC conversion module 320 is configured to receive the filtered AC power AC, convert the AC power AC into the DC power DC, and output the DC power DC to the bi-directional DC/DC conversion module 330.

The bi-directional DC/DC conversion module 330 is coupled to the AC/DC conversion module 320, the battery swapping cabinet 220 and the control system 230. When the power grid PG is used as a power source, the bi-directional DC/DC conversion module 330 is configured to convert the DC power provided by the AC/DC conversion module 320 into a voltage suitable for the battery swapping cabinet 220 and the control system 230. When the swappable battery B in the battery swapping cabinet 220 is used as a power source, the bi-directional DC/DC conversion module 330 is configured to convert the voltage of the DC power DC provided by the swappable battery B into a voltage suitable for the control system 230.

In one embodiment, if the AC/DC conversion module 320 is a unidirectional (one-way) AC/DC converter, the power supply system 210 may further include one or more inverters 340. The inverter 340 is coupled between the electromagnetic interference filter module 310 and the bi-directional DC/DC conversion module 330, and is configured to receive the converted DC power DC (the power source is the swappable batteries B) from the bi-directional DC/DC conversion module 330. The inverter 340 converts the DC power DC to the AC power AC, and outputs the AC power AC to provide the ancillary electric power.

In the embodiment of FIG. 3B, the difference from the embodiment of FIG. 3A is that the AC/DC conversion module 320 may be a bi-directional AC/DC converter. Therefore, the AC/DC conversion module 320 may receive the filtered AC power AC from the electromagnetic interference filter module 310, and convert and output the DC power DC. The AC/DC conversion module 320 may also receive the converted DC power DC from the bi-directional DC/DC conversion module 330, convert and output the AC power AC to provide the ancillary electric power.

It is worth mentioning that in the embodiments of FIG. 3A and FIG. 3B, the bi-directional DC/DC conversion module 330 is used to achieve forward (i.e., power flows from the power grid PG to the battery swapping network S2) and reverse (i.e., power flows from the battery swapping network S2 to the power grid PG) DC power conversion, but the present disclosure is not limited to this.

In some embodiments, the bi-directional DC/DC conversion module 330 may be replaced with multiple unidirectional DC/DC conversion modules to achieve forward and reverse DC power conversion respectively.

As shown in FIG. 2, in some embodiments, when the power grid PG is abnormal (e.g., detecting an abnormal grid factor), the battery swapping system 200A may first perform "consumption reduction" and may further transmit the ancillary electric power to the power grid PG to restore stability to the power grid PG. In order to achieve the aforementioned "consumption reduction", the battery swapping system 200A will switch to Uninterruptible Power Supply (UPS) mode to operate. The battery swapping system 200A changes to the swappable batteries B as the power source and stops receiving power from the power grid PG, thereby reducing the consumption of the power grid PG. Specifically, the battery swapping system 200A selects at least one swappable battery B with sufficient power among all the verified swappable batteries B in the battery swapping cabinet 220 in advance, and sets the selected swappable battery B as a UPS battery.

The UPS battery must be used as a power source for the driving power in UPS mode, so when the battery swapping system 200A receives power from the power grid PG, the UPS battery will be set to a standby state of "unallowable to be recharged and ready to discharge". In one embodiment, the UPS battery may be set to not to provide power to the power grid PG, so that all power of the UPS battery may be used to drive the battery swapping system 200A. In another embodiment, the UPS battery may be set to provide power to the power grid PG. In other words, in UPS mode, in addition to drive the battery swapping system 200A, the power of the UPS battery may further be used as a part of power source of the ancillary electric power.

When the grid factor is abnormal, in order to reduce the consumption, the battery swapping system 200A may first interrupt the power input connection between the power supply system 210 and the power grid PG by controlling the power switch module 211 to stop receiving power from the power grid PG. At this time, the battery swapping system 200A may operate in the UPS mode. The battery swapping system 200A may use the power of the UPS battery as the driving power.

In some embodiments, the battery swapping system 200A may further first exclude the UPS battery among all the verified swappable batteries B in the battery swapping cabinet 220, then select "all or part of the remaining swappable batteries B " and set the selected swappable batteries B as the UPS ancillary battery. When the battery swapping system 200A uses the power grid PG as the power source, the UPS ancillary battery may be charged normally. When the battery swapping system 200A stops receiving power from the power grid PG, the control system 230 may switch/change to the UPS mode, and the UPS battery first provides the driving power to avoid power supply interruption. Then, the control system 230 uses the driving power provided by the UPS battery to control the UPS ancillary battery to change the operation (e.g., switching from a rechargeable state to a dischargeable state), so that the UPS ancillary battery is controlled to begin to discharge, providing more of the driving power. Furthermore, the battery swapping system 200A may control the UPS ancillary battery and/or other available swappable batteries B (e.g., the swappable batteries B that may be swapped) to discharge simultaneously to provide the ancillary electric power to the power grid PG.

In one embodiment, the battery swapping system 200A may only use the UPS battery as the power source, and control all other swappable batteries B (including the UPS ancillary battery and the swappable batteries B that may be swapped) to discharge at the same time to provide higher power of the ancillary electric power to the power grid PG.

In one embodiment, when the battery swapping system 200A is in service mode (using the power grid PG as the power source) or UPS mode (using the swappable batteries B as the power source), the UPS battery and/or the UPS ancillary battery may be set to be non-swappable.

In one embodiment, the UPS battery and/or the UPS ancillary battery may be set to be non-swappable only in UPS mode. In service mode, when the battery swapping system 200A loses the battery originally assigned as the UPS battery and/or the UPS ancillary battery due to the battery swapping service, the control system 230 may automatically assign another swappable battery B as the current UPS battery and/or current UPS ancillary battery, or the control system 230 may not assign any UPS ancillary battery (when losing the UPS ancillary battery).

In one embodiment, the battery swapping system 200A may provide the battery swapping service in both service mode and UPS mode (including providing the ancillary electric power). In one embodiment, during a switching period, such as switching from service mode to UPS mode, or from UPS mode to service mode, the battery swapping system 200A may suspend the battery swapping service until the switching period is completed. The aforementioned suspend time may not be greater than 10 seconds.

In one embodiment, when the battery swapping system 200A is providing the ancillary electric power, the battery swapping service may be suspended to avoid the power reduction of the ancillary electric power. Taking "Regulation Reserve" as an example, the aforementioned time to provide the ancillary electric power is usually several minutes to tens of minutes, so the suspension time of the battery swapping service will not be too long.

In one embodiment, the control system 230 may set a preset number (e.g., 2 or 4) of the swappable batteries B with sufficient power (e.g., it's SoC is greater than 80%) to be unallowable to discharge, so as to prevent this swappable batteries B from discharging and reducing the battery level during the period of providing the ancillary electric power. Accordingly, it ensures that during the period of providing the ancillary electric power, the swappable batteries B with sufficient power may be used to provide the battery swapping service.

Referring to FIG. 2, in some embodiments, the battery swapping network system S2 may include multiple battery swapping systems 200A, 200B, and further includes a backend system 200C. Each of the battery swapping systems 200A, 200B is respectively located in different geographical location. Moreover, each of the battery swapping systems 200A and 200B may be equipped with the grid monitoring systems PM1 and PM2 respectively to monitor the grid factor in each geographical location. The grid monitoring systems PM1 and PM2 are connected to the Internet N and communicate with the backend system 200C or other servers (e.g., a management server of a energy trading platform) through the Internet N.

The backend system 200C is connected to the battery swapping systems 200A, 200B through the Internet N. The backend system 200C is configured to transmit a power ancillary configuration to the battery swapping systems 200A, 200B. The power ancillary configuration is configured to control the battery swapping systems 200A and 200B to provide multiple ancillary electric power when the grid factor is abnormal.

The present disclosure further includes a readiness step of standby. Specifically, the power ancillary configuration may include an assigned standby period. During the assigned standby period, when the grid factor is abnormal, the battery swapping systems 200A, 200B may perform consumption reduction and further provide the ancillary electric power. On the other hand, during the assigned standby period, when the grid factor is normal, the battery swapping systems 200A, 200B receive power form the power grid PG.

The assigned standby period may be set arbitrarily, for example, set to "a period when the battery swapping service has lower demand", or to "a period when the power consumption demand of the power grid PG has greater demand". Outside the assigned standby period, the battery swapping systems 200A and 200B may stop receiving the monitoring signal Sa from the grid monitoring system PM1 and PM2, and will not perform consumption reduction and provide the ancillary electric power when the grid factor is abnormal. Alternatively, the battery swapping systems 200A and 200B may continue to receive the monitoring signal Sa, but do not perform consumption reduction when the grid factor is abnormal, nor do they provide the ancillary electric power.

The present disclosure further includes a step of configuring the power ancillary configuration. In one embodiment, the backend system 200C may evaluate power feeding capabilities of multiple battery swapping systems 200A and 200B based on historical data, and then generates the power ancillary configuration accordingly. Specifically, the backend system 200C calculates a power feed capacity data based on a historical operation data of the battery swapping systems 200A and 200B. "Power feed capacity data" includes the feed capacities of the battery swapping systems 200A, 200B, and the backend system 200C obtains " winning bid data for service" based on the power feed capacity data. The winning bid data for service may be obtained through automatic computer bidding or manual bidding.

In one embodiment, the winning bid data for service may include a winning bid capacity, such as operator of the battery swapping systems 200A, 200B committed to providing the amount of power after winning the bid and signing the contract. Next, the backend system 200C generates/sets the power ancillary configuration based on the winning bid data for service.

In one embodiment, the power ancillary configuration may be configured to indicate a sum of the feed capacities of multiple battery swapping systems 200A, 200B, and the sum may be greater than the winning bid capacity. Accordingly, during providing the ancillary electric power, even if the battery swapping systems 200A and 200B reduce the power of the ancillary electric power due to providing the battery swapping service, the total amount of actual feed power may still be made to comply with the winning bid capacity.

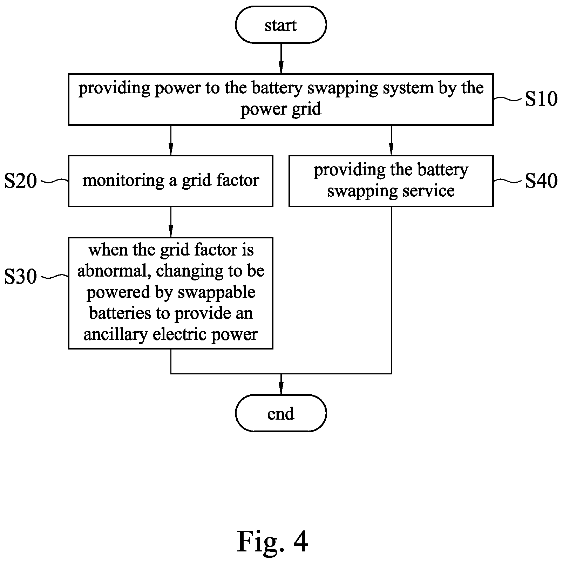

Referring to FIG. 2 and FIG. 4, FIG. 4 is a flowchart illustrating a method of providing ancillary electric power by a battery swapping system in some embodiments of the present disclosure. The method includes steps S10-S40. In step S10, when the method starts to be performed, power may be provided to the battery swapping system 200A by the power grid PG. As mentioned above, the battery swapping network system S2 of the present disclosure may be applied to multiple battery swapping systems 200A, 200B at the same time. Since the controls on multiple battery swapping systems 200A and 200B are similar, the battery swapping systems 200A are used as an example for explanation.

In step S20, the battery swapping network system S2 monitors the grid factor. If the battery swapping system 200A receives an abnormal signal (e.g., a frequency abnormal signal), it may be confirmed that the grid factor is abnormal. The ways to determine whether "the grid factor is abnormal" includes at least the following two embodiments.

In the first embodiment, the grid monitoring system PM1 may determine whether the grid factor (e.g., the grid frequency, voltage/current or power) exceed a preset range, and generate a monitoring signal Sa based on the determination result. For example, if the determination result is abnormal, the monitoring signal Sa will include a frequency abnormal signal, and the monitoring signal Sa will be transmitted to the battery swapping system 200A, so that the battery swapping system 200A confirm/determine that the grid factor is abnormal.

In the second embodiment, the monitoring signal Sa generated by the grid monitoring system PM1 may include the grid factor. Therefore, when the grid factor is abnormal, the battery swapping system 200A may determine that the grid factor included in the received monitoring signal Sa is an abnormal value. For example, the battery swapping system 200A determine whether a grid frequency of the monitoring signal Sa is lower than a preset frequency.

In step S30, when the grid factor is abnormal, the battery swapping system 200A will change the operation and stop receiving power from the power grid PG. The battery swapping system 200A controls the swappable batteries B to discharge (e.g., switches/changes to be powered by the swappable batteries B) for using the electricity discharged from the swappable batteries B as the driving power to the battery swapping system 200A, and to provide the ancillary electric power to the power grid PG.

In addition, in step S40, regardless of the monitoring results of the grid factor, the battery swapping system 200A may provide battery swapping service. That is, at least part of the swappable batteries B in the battery swapping cabinet 220 may be provided to user for swapping.

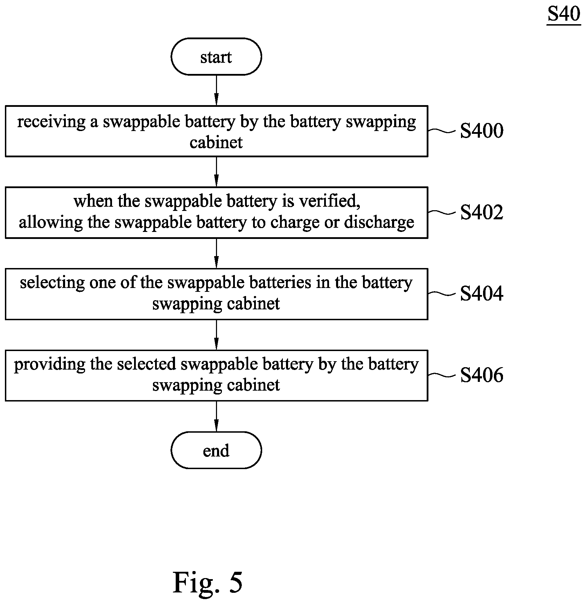

Referring FIG. 2, FIG. 4 and FIG. 5, FIG. 5 is a detailed flow chart of step S40 "providing the battery swapping service" in FIG. 4. In step S400, the battery swapping cabinet 220 is configured to receive a swappable battery B placed/inserted into a battery slot 221.

In step S402, the control system 230 perform a verification on the placed/inserted swappable battery B. After the swappable battery B passes the verification, the battery swapping system 200A will allow charging or discharging of the swappable battery B.

In step S404, the control system 230 selects one of the swappable batteries B from the battery swapping cabinet 220. Normally, the selected swappable battery B is different from the placed/inserted swappable battery B, and the SoC of the selected swappable battery B needs to be higher than a preset value (eg: 80%). When the placed/inserted swappable battery B has sufficient power (e.g., the battery level, such as SoC, is higher than the battery level of all swappable batteries B in the battery swapping cabinet 220, or higher than a preset value), the placed/inserted swappable battery B will be selected to be ejected to prevent the user from getting a swappable battery B with a lower SoC after battery swapping.

In step S406, the battery swapping cabinet 220 is configured to provide the selected swappable battery B to the user to complete the battery swapping service.

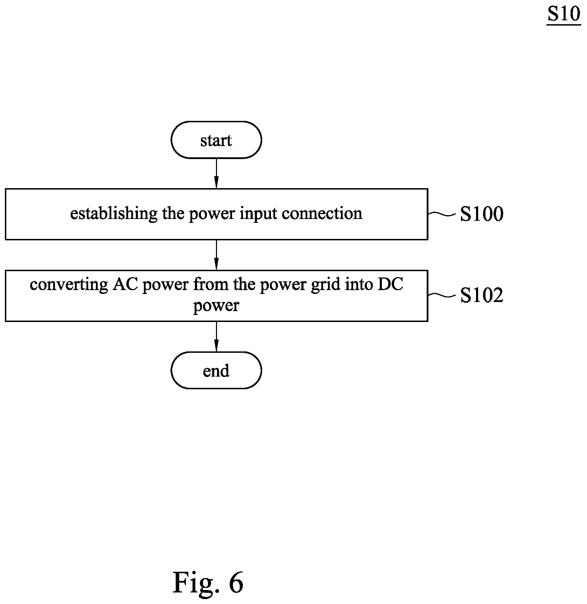

Referring FIG. 2, FIG. 4 and FIG. 6, FIG. 6 is a detailed flow chart of step S10 in FIG. 4. In step S100, the control system 230 drives the power supply system 210 to open/establish/conduct a power input connection between the power supply system 210 and the power grid PG, so that the power from the power grid PG may be input into the battery swapping system 200A.

In step S102, the power supply system 210 converts the AC power AC from the power grid PG into the DC power DC, so that the converted DC power DC is suitable for the control system 230 and the battery swapping cabinet 220, as shown in the embodiments shown in FIG. 3A and FIG. 3B.

Referring FIG. 2, FIG. 4 and FIG. 7, FIG. 7 is a detailed flow chart of step S30 "provide an ancillary electric power" in FIG. 4. In step S300, when the grid factor is abnormal, the control system 230 will control the power supply system 210 to interrupt the power input connection between the power supply system 210 and the power grid PG, so as to stop receiving power from the power grid PG.

In step S302, after the power input connection is interrupted, the battery swapping system 200A is switched to the UPS mode.

In step S304, the power supply system 210 converts the DC power DC from the swappable batteries B into the AC power AC, so that the converted current power AC is suitable for the power grid PG.

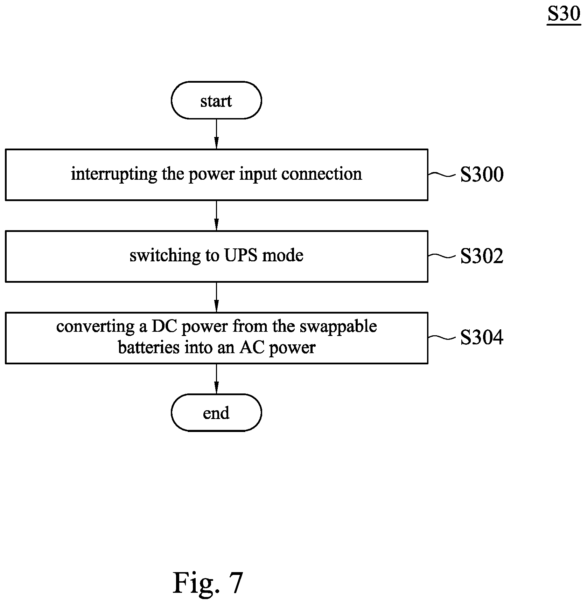

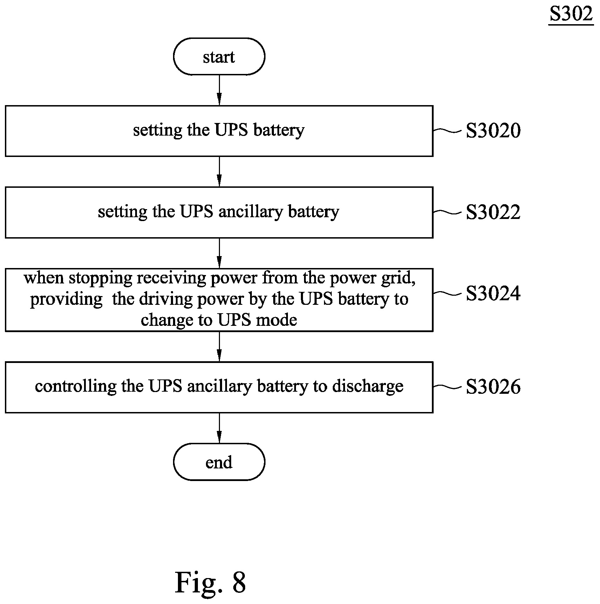

Referring FIG. 2, FIG. 4 and FIG. 8, FIG. 8 is a detailed flow chart of step S302 "switching to UPS mode" in FIG. 7. Step S302 includes steps S3020-S3026. Steps S3020 and S3022 may be performed when the battery swapping system 200A uses the power grid PG power as the power source, when leaving the factory, when installing software and firmware updates, or when accepting remote operations.

In step S3020, the control system 230 selects at least one swappable battery among multiple verified swappable batteries B with sufficient power in the battery swapping cabinet 220, and sets the selected swappable battery as a UPS battery. As mentioned above, when using the power grid PG as the power source, the UPS battery will be set to be unallowable to be recharged and prepare for discharge. In one embodiment, the control system 230 may be configured to always set a swappable battery B at a specified position as the UPS battery. For example, the aforementioned specified position may be a first battery slot 221 in the first row of a main battery swapping cabinet 220 (e.g., a battery swapping cabinet 220 equipped with the control system 230), or a first battery slot 221 in the first row of each battery swapping cabinet 220, but is not limited to this.

In step S3022, the control system 230 further selects at least one swappable battery from the multiple verified the swappable batteries B in the battery swapping cabinet 220, sets the selected swappable battery as a UPS ancillary battery. The UPS ancillary battery is different from the UPS battery.

In step S3024, when the battery swapping system 200A stops receiving power from the power grid PG, the battery swapping system 200A will continuously provide the driving power from the UPS battery for enabling to switch to the UPS mode.

In step S3026, when the battery swapping system 200A obtains the driving power from the UPS battery, the battery swapping system 200A will control the UPS ancillary battery to switch to discharge, so that the UPS ancillary battery provides the driving power, and provide the ancillary electric power by all or part of the swappable batteries B.

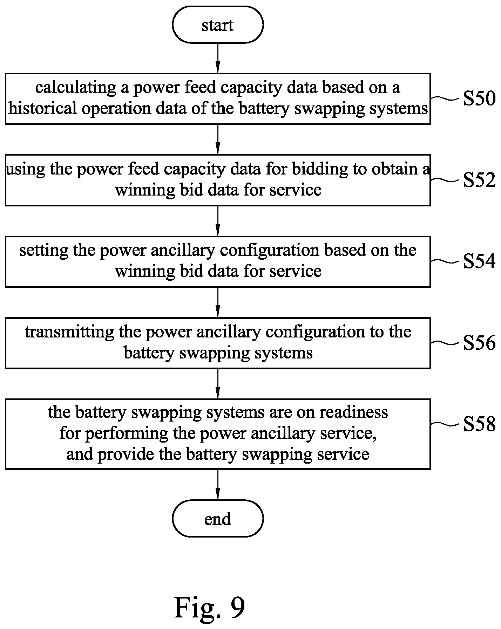

Referring FIG. 2, FIG. 4 and FIG. 9, FIG. 9 is a flowchart illustrating specific steps in the method in some embodiments of the present disclosure. In step S50, the backend system 200C calculates the power feed capacity data of each of the battery swapping systems 200A and 200B based on the historical operation data of multiple battery swapping systems 200A and 200B. The above power feed capacity data may include feed capacities of each of battery swapping systems 200A and 200B.

In step S52, the backend system 200C uses the power feed capacity data for bidding to obtain a winning bid data for service. The winning bid data for service may be obtained by automatic computer bidding or manual bidding. The content of the winning bid data for service is based on the specifications of an electric power service contract signed. The winning bid data for service mentioned above may include a total winning bid capacity (i.e., a minimum power that the power ancillary service must provide).

In step S54, the backend system 200C configures multiple power ancillary configurations based on the winning bid data for service, each of the power ancillary configurations corresponds to each of the battery swapping systems 200A, 200B.

In step S56, the backend system 200C transmits the power ancillary configuration to the corresponding battery swapping systems 200A, 200B. In step S58, the battery swapping systems 200A and 200B are on standby and are on readiness for performing the power ancillary service based on the power ancillary configuration, and provide battery swapping service. A sum of the feed capacities of the battery swapping systems 200A, 200B indicated by the above power ancillary configuration(s) is greater than the total winning bid capacity, so as to ensure the performance of the power service contract.

The method of present disclosure can provide the power ancillary service by multiple swappable batteries B accommodated in the battery swapping systems 200A, 200B in real time when the power system of the power company is abnormal. Accordingly, not only make full use of each swappable battery B, but revenue obtained by providing the power ancillary service can also be obtained.

Through the battery swapping system, the battery swapping network system and the method for providing ancillary electric power of the present disclosure, when the power system of the power company is abnormal, the swappable batteries in the battery swapping system provide the power ancillary service immediately to restore stability to the power grid. In addition to properly utilizing all the batteries in the battery swapping system, it may also obtain revenue from providing the power ancillary service. Furthermore, the battery swapping system can further use the accommodated batteries to provide the battery swapping service.

## Claims

1. A battery swapping system (100, 200A, 200B), comprising:
a power supply system (110, 210) coupled to a power grid (PG) and a grid monitoring system (PM) configured to detect a grid factor;
at least one battery swapping cabinet (120, 220) configured to accommodate a plurality of swappable batteries (B); and
a control system (130, 230) coupled to the power supply system (110, 210) and the at least one battery swapping cabinet (120, 220), wherein when a swappable battery (B) is placed into the at least one battery swapping cabinet (120, 220), the control system (130, 230) is configured to perform a verification on the placed swappable battery (B), and the control system (130, 230) is further configured to control the plurality of swappable batteries (B) that passed the verification in the at least one battery swapping cabinet (120, 220) to charge or discharge;
wherein when the grid factor is abnormal, the power supply system (110, 210) stops receiving power from the power grid (PG), and the control system (130, 230) controls the plurality of swappable batteries (B) to discharge to provide a driving power to the battery swapping system (100, 200A, 200B) and an ancillary electric power to the power grid (PG).

2. The battery swapping system of claim 1, wherein the control system (130, 230) is configured to receive a monitoring signal from the grid monitoring system (PM), wherein the monitoring signal comprises a frequency abnormal signal or indicates a grid frequency lower than a preset frequency when the grid factor is abnormal.

3. The battery swapping system of claim 1 or 2, wherein the power supply system (110, 210) comprises:
a power switch module (211) configured to interrupt a power input connection between the power supply system (110, 210) and the power grid (PG) to stop receiving power from the power grid (PG) when the grid factor is abnormal;
wherein the power switch module (211) is further configured to restore the power input connection when the grid factors return to normal, after a preset time, or when SoC of one or more of the plurality of swappable batteries (B) is lower than a preset SoC lower threshold; and
a power conversion module (212) coupled to the power switch module (211), configured to convert an AC power from the power grid (PG) into a DC power suitable for the control system (130, 230) and the at least one battery swapping cabinet (120, 220), and configured to convert a DC power from the plurality of swappable batteries (B) into an AC power suitable for the power grid (PG).

4. The battery swapping system of claim 1, 2 or 3, wherein at least one of the plurality of swappable batteries (B) is set as an UPS battery, when the power supply system (110, 210) stops receiving power from the power grid (PG), the battery swapping system (100, 200A, 200B) receives the driving power from the UPS battery.

5. The battery swapping system of claim 4, wherein when the power supply system (110, 210) receives power from the power grid (PG), the UPS battery is set to be unallowable to be recharged and prepare for discharge; at least one part of the plurality of swappable batteries (B) is set as an UPS ancillary battery; when the battery swapping system (100, 200A, 200B) stops receiving power from the power grid (PG), the UPS battery is first configured to provide the driving power, and then the UPS ancillary battery is controlled to discharge to provide the driving power.

6. The battery swapping system of claim 4 or 5, wherein when the control system (130, 230) stops receiving power from the power grid (PG), the control system (130, 230) is configured to perform a verification on the placed swappable battery (B), and is configured to select one of the plurality of swappable batteries (B) to swap with the placed swappable battery (B).

7. The battery swapping system of claim 1, 2, 3, 4, 5 or 6, wherein the at least one battery swapping cabinet (120, 220) comprises a plurality of battery slots, each of the plurality of battery slots comprises a connector, a data transmitter and a controller, wherein when a swappable battery (B) is placed into one of the plurality of battery slots and the connector is coupled to the swappable battery (B), the data transmitter is configured to communicate with the swappable battery (B).

8. The battery swapping system of claim 1, 2, 3, 4, 5, 6 or 7, wherein the power supply system (110, 210) comprises:
at least one electromagnetic interference filter module (310) configured to filter a noise in an AC power provided by the power grid (PG);
at least one AC/DC conversion module (320) is configured to receive the AC power filtered by the at least one electromagnetic interference filter module (310), and is configured to output a DC power; and
at least one bi-directional DC/DC conversion module (330) coupled to the at least one AC/DC conversion module (320) and the at least one battery swapping cabinet (120, 220), wherein the at least one bi-directional DC/DC conversion module (330) is configured to convert a voltage of the DC power to be suitable for the at least one battery swapping cabinet (120, 220), and is configured to convert the DC power provided by the plurality of swappable batteries (B) into a voltage suitable for the control system (130, 230).

9. The battery swapping system of claim 8, wherein the at least one AC/DC conversion module (320) comprises a unidirectional AC/DC converter, and the power supply system (110, 210) further comprises:
at least one inverter (340) is configured to receive the DC power converted by the at least one bi-directional DC/DC conversion module (330), and is configured to output an AC power to provide the ancillary electric power.

10. The battery swapping system of claim 8, wherein the at least one AC/DC conversion module (320) comprises a bi-directional AC/DC converter, and is configured to receive the DC power converted by the at least one bi-directional DC/DC conversion module (330), and is configured to output an AC power to provide the ancillary electric power.

11. A battery swapping network system (S1, S2), comprising:
a plurality of battery swapping systems (200A, 200B) as claim 1, 2, 3, 4, 5, 6, 7, 8, 9 or 10, wherein the plurality of battery swapping systems (200A, 200B) is arranged on a plurality of geographical locations; and
a backend system (220C) coupled to the plurality of battery swapping systems (200A, 200B) through internet, and configured to transmit a power ancillary configuration to the plurality of battery swapping systems (200A, 200B), so that the plurality of battery swapping systems (200A, 200B) provides a plurality of ancillary electric power when the grid factor is abnormal.

12. A method of providing ancillary electric power, comprising:
providing power to a battery swapping system (100, 200A, 200B) by a power grid (PG);
receiving, by at least one battery swapping cabinet (120, 220) of the battery swapping system (100, 200A, 200B), a swappable battery (B);
after the received swappable battery (B) passes a verification, allowing the received swappable battery (B) to charge or discharge, and selecting one of a plurality of swappable batteries (B) placed into the at least one battery swapping cabinet (120, 220) to swap with the received swappable battery (B); and
when a grid factor of the power grid (PG) is abnormal, controlling the battery swapping system (100, 200A, 200B) to stop receiving power from the power grid (PG), and controlling the plurality of swappable batteries (B) to discharge to provide a driving power to the battery swapping system (100, 200A, 200B) and provide an ancillary electric power to the power grid (PG).

13. The method of providing ancillary electric power of claim 12, further comprising:
receiving a monitoring signal and determining the grid factor is abnormal when the monitoring signal comprises a frequency abnormal signal or indicates a grid frequency lower than a preset frequency;
wherein providing power to the battery swapping system (100, 200A, 200B) by the power grid (PG) comprises:
establishing a power input connection between the battery swapping system (100, 200A, 200B) and the power grid (PG) to receive power from the power grid (PG); and
converting an AC power from the power grid (PG) into a DC power suitable for a control system (130, 230) and the at least one battery swapping cabinet (120, 220) of the battery swapping system (100, 200A, 200B);
wherein controlling the battery swapping system (100, 200A, 200B) to stop receiving power from the power grid (PG), and controlling the plurality of swappable batteries (B) to discharge comprises:
interrupting the power input connection to stop receiving power from the power grid (PG); and
converting a DC power from the plurality of swappable batteries (B) into an AC power suitable for the power grid (PG).

14. The method of providing ancillary electric power of claim 12 or 13, further comprising:
setting at least one of the plurality of swappable batteries (B) as an UPS battery;
wherein when the power grid (PG) is used as a power source, setting the UPS battery to be unallowable to be recharged and prepare for discharge;
setting at least one part of the plurality of swappable batteries (B) as an UPS ancillary battery; and
when stopping receiving power from the power grid (PG), providing the driving power by the UPS battery;
wherein controlling the plurality of swappable batteries (B) to discharge to provide the driving power to the battery swapping system (100, 200A, 200B) comprises:
when the battery swapping system (100, 200A, 200B) stops receiving power from the power grid (PG), providing the driving power by the UPS battery, and then controlling the UPS ancillary battery to discharge to provide the driving power.

15. The method of providing ancillary electric power of claim 12, 13 or 14, further comprising:
transmitting, by a backend system (220C), a power ancillary configuration to a plurality of the battery swapping systems (200A, 200B) through internet, so that the plurality of battery swapping systems (200A, 200B) provides the ancillary electric power based on the power ancillary configuration;
wherein the method further comprises at least one of a readiness step of standby and a step of configuring the power ancillary configuration;
wherein the readiness step comprises:
during an assigned standby period, when the grid factor is abnormal, providing the ancillary electric power by the plurality of battery swapping systems (200A, 200B), wherein the power ancillary configuration comprises the assigned standby period; and
during the assigned standby period, when the grid factor is normal, receiving power from the power grid (PG) by the plurality of battery swapping systems (200A, 200B);
wherein the step of configuring the power ancillary configuration comprises:
calculating a power feed capacity data based on a historical operation data of the plurality of battery swapping systems (200A, 200B), wherein the power feed capacity data comprises a plurality of feed capacities of the plurality of battery swapping systems (200A, 200B);
obtaining a winning bid data for service based on the power feed capacity data, wherein the winning bid data for service comprises a total winning bid capacity; and
configuring the power ancillary configuration based on the winning bid data for service, wherein a sum of the plurality of feed capacities of the plurality of battery swapping systems (200A, 200B) indicated by the power ancillary configuration is greater than the total winning bid capacity.
